# EUROPEAN PATENT SPECIFICATION

(11) **EP 0 761 276 B1**
(45) Date of publication and mention of the grant of the patent: **05.01.2000**
(21) Application number: 96202390.9
(22) Date of filing: 28.08.1996
(51) Int. Cl.: B01D 21/00, B01D 36/04

(54) **Apparatus for separating effluent into solid and liquid phases**
Vorrichtung zur Trennung von Abwasser in fester und flüssiger Phase
Appareil de séparation d'effluent en phase solide et liquide

(30) Priority: 02.09.1995 GB 9517903
(43) Date of publication of application: 12.03.1997
(73) Proprietor: KODAK LIMITED, Harrow, Middlesex HA1 4TY (GB); EASTMAN KODAK COMPANY, Rochester, New York 14650-2201 (US)
(72) Inventor: Grimsey, Andrew David, c/o Kodak Ltd., Harrow, Middlesex, HA1 4TY (GB)
(74) Representative: Haile, Helen Cynthia

(56) References cited:
- EP-A- 0 596 549

## Description

### Field of the Invention

This invention relates to apparatus for separating effluent into solid and liquid phases. In particular, but not exclusively, the invention is concerned with apparatus for separating solid and liquid phases of chemically treated photographic effluent from a small scale photographic processing apparatus such as a minilab.

### Background of the Invention

A typical minilab has a number of sections for carrying out a series of photographic processes and is capable of producing photographic prints from an exposed roll of film with a high degree of automation. One of the processes which is carried out in a typical minilab is the development of exposed rolls of photographic film to form negatives. Once the negatives have been developed they can be exposed onto photographic paper to produce latent images on that paper. The exposed paper is then treated with processing chemicals to develop the latent images to produce stable prints.

The effluent produced by the processes carried out in the minilab, particularly the film and paper developing processes, is unpleasant and is not environmentally friendly. Typically, the effluent will include heavy metal ions, sequestering agents, substances that have a high oxygen demand, and colour developing agents and their derivatives. Disposal of such effluent, untreated, into a sewerage system would contravene sewer regulations in most countries of the world. Hence the effluent requires treatment before it can be disposed of.

WO-A-92/04660, the contents of which are included herein by reference, discloses a system for treating photographic effluent. In the system disclosed therein, photographic effluent is treated by precipitating or otherwise removing harmful pollutants from the effluent to leave an environmentally acceptable liquid phase, which may be flushed down a drain, and a solid phase which can be disposed of at an approved waste disposal site.

In the process described in WO-A-92/04660, the chemical oxygen demand of the effluent is reduced before precipitation by addition of an oxidising agent such as hydrogen peroxide. The actual separation into the solid and liquid phases is effected by differential precipitation and absorption by sequential addition of chemical reagents, preferably in a single vessel. Heavy metal ions may be removed by addition of excess metal oxide, hydroxide or carbonate, preferably a group II metal hydroxide. Colour developing agent may be removed by adsorption onto activated charcoal. Sequestering agents may be removed by addition of an ion exchange resin.

WO-A-92/04660 also suggests removing the solid phases by mechanical means such as filtering, settling or by means of a centrifuge.

WO-A-93/02391 discloses a further apparatus for treating photographic effluent. This apparatus includes a mixing unit where photographic effluent is mixed with treatment chemicals and a separation unit where the treated effluent is separated into non-toxic liquid and solid phases. A computer is used to control all stages of the treatment of the effluent. The separation unit comprises a filter unit, a suction pump and a collection chamber. The filter unit includes a container, a filter bed, a scraper for cleaning the filter bed and a supply of filtration material, for example, filter paper. The use of the suction pump which is controlled by the computer improves the rate of separation of the solid and liquid phases.

EP-596-549 discloses a further method and apparatus for treating photographic effluent. The waste from several tanks is fed into a vessel provided with a stirrer. An agent to precipitate insoluble silver compound is added after which the contents of the vessel are pumped through a filter to separate the precipitate and liquid.

US-A-4 608 177 discloses a method of treating X-ray photographic chemicals prior to discharging the same into a drain. In this process de-silvered photographic fixer is mixed with spent developer within a chamber. Iron precipitates settle or adhere to ribbon-like flow restrictors in the chamber. "Relatively clear" liquid effluent is discharged out of the apparatus into, for example, a drain.

GB-A-1 409 459 discloses apparatus for the treatment of at least two aqueous wastes which are not chemically compatible with each other. Waste is treated with chemicals in an addition zone, transferred to a sedimentation zone, then is filtered and is finally transferred to a dilution zone.

### Problem to be solved by the Invention

The problem with the photographic processes described above is that large volumes of effluent are produced which require treatment to separate the solid phase from the liquid phase. Passing the effluent through a filter, such as, filter paper will separate the solid phase from the liquid phase. However, filtering the effluent is not a very efficient way of separating solid and liquid phases. The filtering process is slow, particularly when the filter paper becomes clogged or coated with a layer of solid material.

Because of the volume of effluent produced, the filtering apparatus is unlikely to be able to hold all the effluent which requires filtration hence the effluent usually has to be treated in batches. This means that an operator has to frequently check the progress of the filtering operation which is time consuming.

Moreover, filtering is a slow process and it can take longer to filter the effluent than it takes to chemically treat the effluent. Hence, depending on the quantity of effluent to be treated, the filtering step can act as a bottleneck in the effluent treatment process which slows the process of treating the effluent. The use of a centrifuge to separate the solid and liquid phase is of a comparable speed to filtering. It is, however a batch process which therefore requires more frequent monitoring and intervention by an operator than a continuous process would. It is thus unsuited to treating photographic effluent from a minilab whose principal advantages are a high degree of automation requiring minimal supervision or intervention by a human operator.

The filtering step disclosed in WO-A-93/02391 still limits the volume of effluent which can be treated in a given time period by the apparatus. It does not significantly improve the volume of effluent that the system can handle. Further the apparatus is complicated, requires a significant quantity of energy to operate and is consequently quite expensive to run.

The problem with the apparatus described in US-A-4 608 177 is that the treatment of the chemicals described therein is insufficient to properly render the effluent produced by minilabs sufficiently environmentally friendly. Also, the separation process described therein does not remove all the solid material but allows a small, but significant, amount to pass into a drainage system. Further, the design of the separation chamber described in US-A-4 608 177 is complicated which makes it awkward, and time consuming to clean and empty the chamber.

The apparatus described in GB-A-1 409 459 is quite complex and bulky particularly since many of the features of the apparatus are duplicated to allow the parallel treatment of non-compatible wastes. Also the process is lengthy since all the liquid waste has to pass through all the stages including the filtration stage.

In the apparatus disclosed in EP-596-549 all of the waste is filtered.

### Summary of the Invention

In accordance with one aspect of the present invention, there is provided apparatus for separating treated photographic effluent into liquid and solid phases, the apparatus comprising:-
a first tank arranged to receive photographic effluent;
inlet means for transferring photographic effluent directly to the lower part of the tank;
outlet means arranged to transfer fluid from the upper part of the tank, out of the tank;
filter means for separating solid and liquid phases in the effluent; and
means for periodically transferring the contents of the tank to the filter means.

In a preferred embodiment the apparatus further includes a second tank, and second outlet means arranged to transfer effluent from the upper part of the second tank, out of the second tank, and wherein the outlet means from the first tank transfers effluent from the first tank directly to the lower part of the second tank.

Conveniently, the filter means comprises a filter bag housed in a container, the container being arranged to receive any liquid phase material which passes through the filter bag.

An outlet pipe from the container may be arranged to transfer material in the container to the second tank.

Preferably a pipe and a pump are arranged to transfer material from the lower part of the second tank to the lower part of the first tank.

Typically, the inlet and outlet means comprise pipes.

The first tank may have a volume of 10 to 15 litres, typically 12.5 litres.

In accordance with a second aspect of the invention, there is provided a method for treating photographic effluent, to separate solid and liquid phases in the effluent comprising the steps of:-
pumping photographic effluent containing solid and liquid phase material into the lower part of a sedimentation tank at a rate which does not significantly disturb any settled solid material in the lower part of the tank;
allowing the solid phase material to settle out of suspension in the effluent and settle in the lower part of the tank, so that a boundary is produced between settling solid and generally liquid material;
allowing liquid phase material to flow out of the upper part of the tank via an outlet means located in the upper part of the tank; and
when the boundary between the settling solid layer and the liquid phase approaches the upper part of the tank, pumping the contents of the tank through filter means to separate the solid phase from the liquid phase material.

Preferably, liquid phase material flowing out of the upper part of the tank is transferred to a second tank where further setting of the solid phase material in the effluent can take place, and liquid phase material is allowed to flow out of the upper part of the second tank, and when the contents of the first tank are transferred to the filter means, the contents of the second tank are transferred to the first tank.

The apparatus described in relation to the first aspect of the present invention may be used to carry out the method of the second aspect of the present invention.

### Advantageous Effect of the Invention

One advantage of the present invention is that, by utilising settling to separate a significant proportion of the solid and liquid phases in the effluent, it reduces the volume of effluent that has to be filtered in the time available. Only the slurry which collects in the first tank requires filtering, since settling in the first tank removes the solid phase from a large proportion of the effluent. This increases the capacity of the separation apparatus.

A further advantage is that the separation operation can occur in parallel with the treatment operation, which again produces a benefit in increasing the overall capacity of the effluent treatment system.

Further, effluent passing into the tank is filtered by the existing solid phase material/slurry which is already present in the tank and this improves the efficiency of the apparatus.

Finally, the system uses very few mechanical parts and minimal energy to operate. The design of the various components may be uncomplicated and therefore inexpensive. Since the principal source of energy for removal of the solid phase from the liquid phase is gravity, the energy requirements of the system are low.

### Brief Description of the Drawings

For a better understanding of the present invention, reference will now be made, by way of example only, to the accompanying drawings in which:-
Figure 1 is a schematic illustration of an embodiment of an effluent treatment system constructed in accordance with the present invention illustrating the flow of treated effluent through a sedimentation system; and
Figure 2 is a schematic illustration of the embodiment of Figure 1 illustrating the flow of treated effluent through a filtration system.

### Detailed Description of the Invention

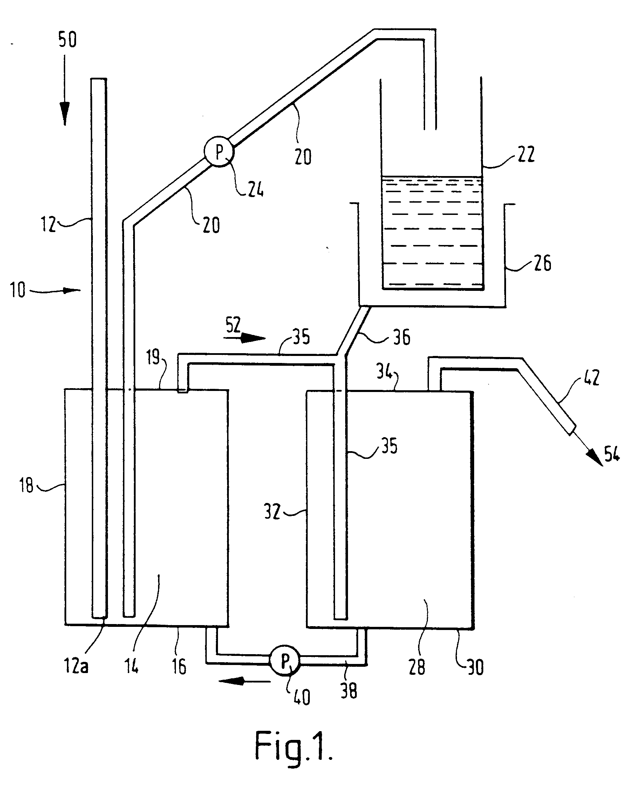

Referring to the drawings, Figure 1 shows the layout of component parts of a separation system 10 for separating treated photographic effluent into solid and liquid phases. Photographic effluent, which may have been treated by the process described in WO-A-92/04660, is fed from a reaction chamber, not shown, along a pipe 12 into a first sedimentation tank 14. The tank 14 has a base 16, sidewalls 18 and a top 19. The pipe 12 has an open end 12a located close to the base 16 of the tank. The volume of the tank is approximately 12.5 litres.

A further pipe 20 extends upwards from the base 16 of the tank, out of the tank, to a filter bag 22, via a pump 24. The filter bag 22 is located inside a container 26 which is arranged to collect any liquid which passes through the filter bag. The container is positioned generally above the top of the tank 14.

A second sedimentation tank 28 is located adjacent the first sedimentation tank 14. The second tank 28 also has a base 30, sidewalls 32 and a top 34. An outlet pipe 35 runs from the top 19 of the first sedimentation tank 14 to the base 30 of the second sedimentation tank 28. That pipe 35 connects with a further pipe 36 which extends from the base of container 26. A further pipe 38 connects the base 30 of the second tank 28 with the base 16 of the first tank 14 via a pump 40.

An outlet pipe 42 leads from the top 34 of the second tank 28 to a drain 54 or to an effluent collection container (not shown), as required.

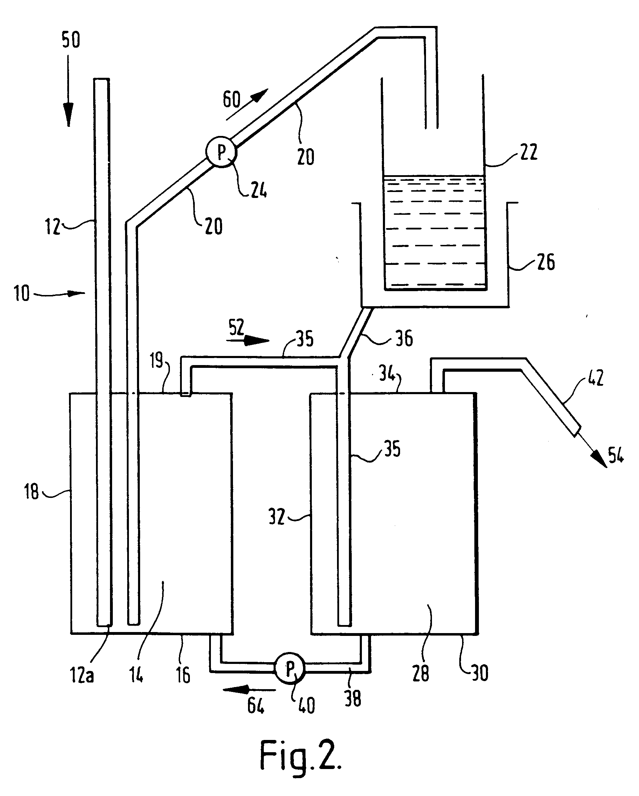

Figure 2 shows an identical arrangement of components as that shown in Figure 1. However, the flow paths for effluent shown in Figure 1 and Figure 2 differ, as is explained below, the cross-hatching in pipes 35, 36, 38 and 42 illustrating the flow paths.

In use, with reference to Figure 1 in particular, treated effluent is pumped from the reaction chamber into the first sedimentation tank 14 along pipe 12 as indicated by arrow 50. The rate of pumping is such that the contents of the chamber are not disturbed, that is, so that any solid phase material which has settled at the base 16 of the tank 14 is not agitated and mixed with liquid phase material. When it reaches the first sedimentation tank 14, the solid phase material in the treated effluent begins to settle out of suspension in the liquid and settles at the base 16 of the tank 14. Further treated effluent entering the chamber via pipe 12 will pass upwards through the settling solid phase material. The settling solid phase material already in the tank 14 will itself act as a filter and will trap solid phase material in the effluent, as the effluent flows upwards.

Once the tank 14 is full, the liquid at the top 19 of the tank, which should not contain any significant quantities of solid phase material, will flow out via pipe 35, as indicated by arrow 52, into the second sedimentation tank 28. If any solid phase material does pass into tank 28, it will settle at the base 30 of that tank. Once the level of liquid in tank 28 reaches the top 34, it will flow out of the system through pipe 42 into a drain or an effluent collection tank as indicated by arrow 54.

The use of the second tank 28 increases the capacity of the system and the extends the time for which the system can be run for before it becomes necessary to remove the solid phase material from tank 14, as will be described below.

Referring now to Figure 2, the operation of the system produces a slurry in the base of the first tank 14. The slurry will settle down to a certain density. As further effluent flows into the first sedimentation tank 14, the level of the boundary layer between the solid and liquid phase will rise inside the tank. When the level of the boundary layer reaches, or approaches, the top 19 of the tank 14, it becomes necessary to remove the slurry from the tank to prevent the slurry from contaminating the liquid phase flowing out of the tank.

Removal of the slurry is achieved by pumping the contents of the first tank along pipe 20, as indicated by arrow 60 (Figure 2), into the filter bag 22 by means of pump 24. The slurry separates into a paste or cake which remains inside the filter bag 22 and a liquid which drains into the container 26 and thence into second sedimentation tank 28 via pipes 36 and 35, as indicated by arrow 62. Once the contents of the first tank 14 have been emptied, the contents of the second tank 28 are pumped into the first tank 24 along pipe 38, as indicated by arrow 64. This is done in case any solid material has passed into the second tank 28 either from first tank 14 or from container 26. Effluent treatment and sedimentation then continue as before, that is, as described with respect to Figure 1.

Feeding of treated effluent into the first sedimentation tank 14 is stopped while the first tank 14 is emptied and the contents of the second tank 28 pumped into the same. However that operation does not take long to perform, hence the treatment system is not inoperative for long.

Once the filter bag 22 has become filled to a predetermined level, it is removed and replaced.

The above apparatus improves on the known existing types of separation apparatus because it combines the benefits of filtering and sedimentation. The use of sedimentation to remove solid phase from a proportion of the treated effluent reduces the amount of effluent which has to be filtered, thus increasing the efficiency, capacity and speed of the effluent treatment system.

Experimentation has shown, in the particular embodiment described, that approximately four to six times the volume of the first tank 14 can be pumped into the system before the filtration operation has to be carried out. In a typical application, with a minilab, the filtration operation would only have to be carried out every two or three days. Apart from the filtration operation the system has no significant energy requirements, since gravity is the main energy source, and requires only minimal supervision and no intervention by an operator.

Although the system described above utilises two sedimentation tanks, it would be possible to dispense with the second sedimentation tank and direct the outflow pipe 35 from the first sedimentation tank 14 directly down a drain 54. In this case, the outflow from container 26 would also be direct to a drain 54. However, the use of the second sedimentation tank 28 does increase the capacity of the system and the allowed sedimentation time before liquid phase material exits the system.

It will be readily appreciated that, although the sedimentation tank 14 has been described as having a volume of 12.5 litres, the sedimentation tanks may have any suitable volume and geometry according to the particular application and system set up.

The constituents of treated effluent to be separated may have varying solid and liquid phase concentrations. For example, treated fixer effluent will have a larger solid phase concentration than treated developer effluent.

## Claims

1. Apparatus for separating treated photographic effluent into liquid and solid phases, the apparatus comprising:-
a first tank (14) arranged to receive photographic effluent;
inlet means (12) for transferring photographic effluent directly to the lower part of the tank;
outlet means (35) arranged to transfer fluid from the upper part of the tank, out of the tank;
filter means (22) for separating solid and liquid phases in the effluent; and
means (24) for periodically transferring the contents of the tank to the filter means (28).

2. Apparatus according to claim 1, further including a second tank (28) and second outlet means (42) arranged to transfer effluent from the upper part of the second tank, out of the second tank, and wherein the outlet means from the first tank transfers effluent from the first tank directly to the lower part of the second tank.

3. Apparatus according to claim 1 or 2, wherein the filter means (22) comprises a filter bag housed in a container (26), the container being arranged to receive any liquid phase material which passes through the filter bag.

4. Apparatus according to claim 3, when dependant on claim 1, wherein an outlet pipe from the container is arranged to transfer material in the container to the second tank.

5. Apparatus according to claim 2, or any claim dependant on claim 2, wherein a pipe and a pump are arranged to transfer material from the lower part of the second tank to the lower part of the first tank.

6. Apparatus according to any preceding claim, wherein the inlet and outlet means comprise pipes.

7. A method for treating photographic effluent to separate solid and liquid phase in the effluent comprising the steps of:-
pumping photographic effluent containing solid and liquid phase material into the lower part of a sedimentation tank at a rate which does not significantly disturb any settled solid material in the lower part of the tank;
allowing the solid phase material to settle out of suspension in the effluent and settle in the lower part of the tank, so that a boundary is produced between settling solid and generally liquid material;
allowing liquid phase material to flow out of the upper part of the tank via an outlet means located in the upper part of the tank; and
when the boundary between the settling solid layer and the liquid phase approaches the upper part of the tank, pumping the contents of the tank through filter means to separate the solid phase from the liquid phase material.

8. The use of the apparatus claimed in claim 1 to carry out the method of claim 7.

## Patentansprüche

1. Vorrichtung zum Trennen von behandeltem fotografischem Abwasser in flüssige und feste Phasen, **gekennzeichnet durch**
- einen ersten Tank (14) zum Aufnehmen fotografischen Abwassers,
- eine Zulaufvorrichtung (12) zum direkten Befördern fotografischen Abwassers in den unteren Teil des Tanks,
- eine Auslassvorrichtung (35) zum Fördern von Abwasser vom oberen Teil des Tanks aus dem Tank heraus,
- ein Filter (22) zum Trennen der festen und flüssigen Phasen des Abwassers und
- ein Mittel (24) zum periodischen Übertragen des Tankinhalts zum Filter (22).

2. Vorrichtung nach Anspruch 1, gekennzeichnet durch einen zweiten Tank (28) und eine zweite Auslassvorrichtung (42) zum Fördern von Abwasser vom oberen Teil des zweiten Tanks aus diesem Tank heraus, wobei die Auslassvorrichtung des ersten Tanks Abwasser aus diesem Tank direkt in den unteren Teil des zweiten Tanks fördert.

3. Vorrichtung nach Anspruch 1 oder 2, dadurch gekennzeichnet, dass das Filter (22) einen in einem Behälter (26) untergebrachten Filterbeutel aufweist und dass der Behälter die durch den Filterbeutel strömenden flüssigen Phasen des Abwassers auffängt.

4. Vorrichtung nach Anspruch 3, falls dieser von Anspruch 1 abhängt, dadurch gekennzeichnet, dass ein aus dem Behälter führendes Auslassrohr im Behälter befindliches Abwasser in den zweiten Tank befördert.

5. Vorrichtung nach Anspruch 2 oder einem anderen davon abhängigen Anspruch, dadurch gekennzeichnet, dass ein Rohr und eine Pumpe Abwasser vom unteren Teil des zweiten Tanks in den unteren Teil des ersten Tanks fördern.

6. Vorrichtung nach einem der vorhergehenden Ansprüche, dadurch gekennzeichnet, dass die Zulauf- und die Auslassvorrichtung Rohre aufweisen.

7. Verfahren zum Behandeln fotografischen Abwassers derart, dass das Abwasser in feste und flüssige Phasen aufgeteilt wird, **gekennzeichnet durch** die Schritte:
- Pumpen des aus festen und aus flüssigen Phasen bestehenden Abwassers in den unteren Teil eines Ablagerungstanks mit einer Geschwindigkeit, die abgelagerte feste Phasen im unteren Teil des Tanks nicht wesentlich stört,
- Ermöglichen, dass sich die festen Phasen des Abwassers aus der Suspension im unteren Teil des Tanks ablagern, so dass sich zwischen den festen Phasen und den im allgemeinen flüssigen Phasen eine Grenzschicht bildet,
- Ermöglichen, dass die flüssigen Phasen über eine im oberen Teil des Tanks vorgesehene Auslassvorrichtung aus diesem ausgefördert werden und
- Pumpen des Inhalts durch das Filter, um die festen von den flüssigen Phasen zu trennen, wenn die Grenzschicht zwischen der sich ablagernden festen Phase und den flüssigen Phasen sich dem oberen Teil des Tanks nähert.

8. Verwendung der Vorrichtung nach Anspruch 1 zum Einsetzen des Verfahrens nach Anspruch 7.

## Revendications

1. Appareil destiné à séparer un effluent photographique traité en phases liquide et solide, l'appareil comprenant :
une première cuve (14) agencée afin de recevoir un effluent photographique,
une entrée (12) destinée à transférer l'effluent photographique directement vers la partie inférieure de la cuve,
une sortie (35) agencée afin de transférer le fluide depuis la partie supérieure de la cuve, à l'extérieur de la cuve,
un filtre (22) destiné à séparer les phases solide et liquide de l'effluent, et
un moyen (24) destiné à transférer de façon périodique le contenu de la cuve vers le filtre (22).

2. Appareil selon la revendication 1, comprenant en outre une seconde cuve (28) et une seconde sortie (42) agencées afin de transférer l'effluent depuis la partie supérieure de la seconde cuve, à l'extérieur de la seconde cuve, et dans lequel la sortie de la première cuve transfère l'effluent depuis la première cuve directement vers la partie inférieure de la seconde cuve.

3. Appareil selon la revendication 1 ou 2, dans lequel le filtre (22) comprend une poche filtrante logée dans un récipient (26), le récipient étant agencé afin de recevoir tout matériau quelconque en phase liquide qui passe à travers la poche filtrante.

4. Appareil selon la revendication 3, lorsqu'elle dépend de la revendication 1, dans lequel la conduite de sortie du récipient est agencée afin de transférer le matériau du récipient vers la seconde cuve.

5. Appareil selon la revendication 2, ou l'une quelconque des revendications dépendantes de la revendication 2, dans lequel une conduite et une pompe sont agencées afin de transférer le matériau depuis la partie inférieure de la seconde cuve vers la partie inférieure de la première cuve.

6. Appareil selon l'une quelconque des revendications précédentes, dans lequel l'entrée et la sortie comprennent des conduites.

7. Procédé de traitement d'effluent photographique en vue de séparer des phases solide et liquide de l'effluent comprenant les étapes suivantes :
pomper de l'effluent photographique contenant un matériau en phases solide et liquide jusque dans la partie inférieure d'une cuve à sédimentation à une vitesse qui ne perturbe pas de façon significative tout matériau solide quelconque déposé dans la partie inférieure de la cuve,
permettre la séparation par décantation du matériau en phase solide de la suspension de l'effluent et le dépôt dans la partie inférieure de la cuve, de sorte qu'une séparation se produit entre le solide qui se dépose et le matériau sensiblement liquide,
permettre l'écoulement du matériau en phase liquide à l'extérieur de la partie supérieure de la cuve par l'intermédiaire d'une sortie située dans la partie supérieure de la cuve, et
lorsque la séparation entre la couche de solide qui se dépose et la phase liquide s'approche de la partie supérieure de la cuve, pomper le contenu de la cuve à travers le filtre afin de séparer la phase solide du matériau de la phase liquide dudit matériau.

8. Utilisation de l'appareil selon la revendication 1 afin de mettre en oeuvre le procédé de la revendication 7.
